# EUROPEAN PATENT APPLICATION

(11) **EP 1 569 169 A1**
(43) Date of publication of application: **31.08.2005**
(21) Application number: 03776000.6
(22) Date of filing: 02.12.2003
(51) Int. Cl.: G06T 7/00

(54) **VIDEO SYSTEM**

(30) Priority: 02.12.2002 JP 2002350021; 12.03.2003 JP 2003066423
(71) Applicant: NEC CORPORATION, Tokyo 108-01 (JP)
(72) Inventor: KASUTANI, Eiji NEC Corporation, Tokyo 108-8001 (JP); YAMADA, Akio NEC Corporation, Tokyo 108-8001 (JP)
(74) Representative: Vossius & Partner
(86) International application number: PCT/JP2003/015370
(87) International publication number: WO 2004/051574

(57) **Abstract**

According to an image description system, a feature extracting unit extracts a layout feature from each of frames of an image sequence. A representative feature calculating unit calculates a layout feature representative of the image sequence from a group of the layout features extracted by the feature extracting unit.

## Description

### Technical Field

The present invention relates to an image system and an image identification system.

### Background Art

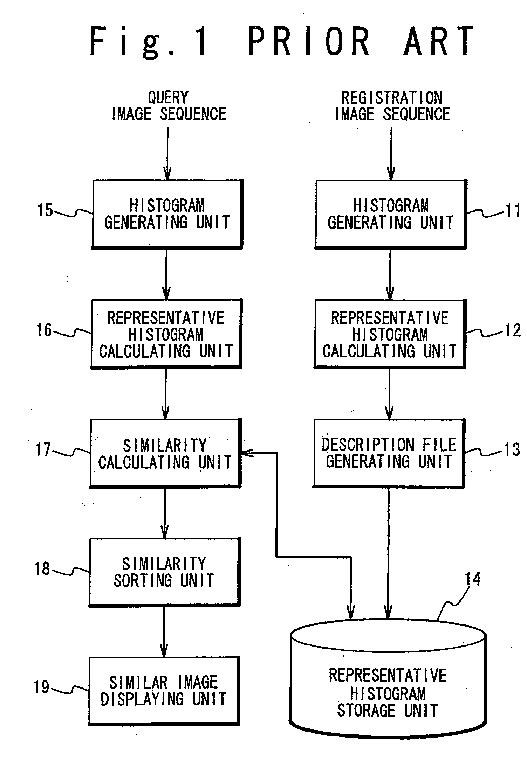

Conventionally, an image sequence description system has been employed with intent to describe features used for retrieving a similar image sequence (a group of frames contained in a video). An image sequence retrieving system using an image sequence description system is described in a first conventional art; A. Mufit Ferman et al., "GROUP-OF-FRAME/PICTURE COLOR HISTOGRAM DESCRIPTORS FOR MULTIMEDIA APPLICATIONS", (ICIP2000). Fig. 1 shows the image sequence retrieving system disclosed in the first conventional art.

With reference to Fig. 1, the image sequence retrieving system has a histogram generating unit 11, a representative histogram generating unit 12, a description file generating unit 13, a representative histogram storage unit 14, a histogram generating unit 15, a representative histogram generating unit 16, a similarity calculating unit 17, a similarity sorting unit 18 and a similar image displaying unit 19.

The histogram generating unit 11 extracts a color histogram from each of frames of a target image sequence which is registered in a database. The representative histogram generating unit 12 calculates an average value of each bin of the color histograms of all the frames which are extracted by the histogram generating unit 11. The description file generating unit 13 describes the calculated average value based on a predetermined format, and then stores the described average value into the representative histogram storage unit 14.

The histogram generating unit 15 extracts a color histogram from each of frames of an image sequence which is given as a query image. The representative histogram generating unit 16 calculates as a representative histogram, an average value of each bin of the color histograms of all the frames which are extracted by the histogram generating unit 15. The similarity calculating unit 17 calculates a similarity between the representative histogram generated by the representative histogram generating unit 16 and each of the representative histograms stored in the representative histogram storage unit 14. The similarity sorting unit 18 rearranges the registered images in the order of higher similarity. The similar image displaying unit 19 displays the images in the order of the higher similarity.

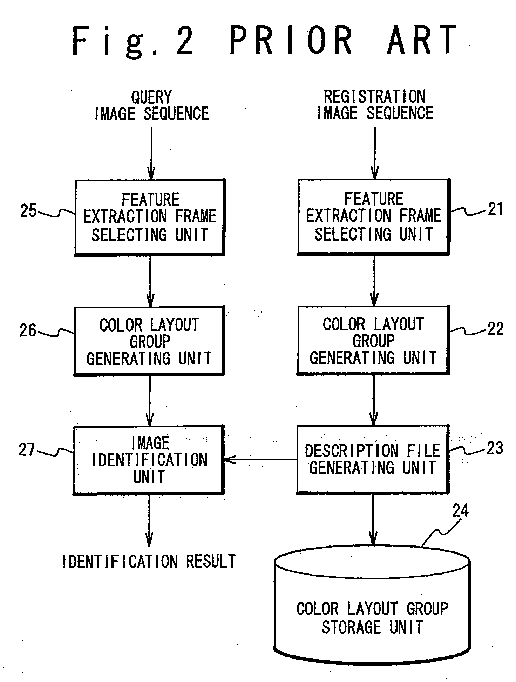

Another typical image identification system (second conventional art) is disclosed in Japanese Laid-open Patent Application No. 2000-259832. Fig. 2 shows an image sequence retrieving system according to the second conventional art. With Reference to Fig. 2, the image sequence identification system has a feature extraction frame selecting unit 21, a color layout group generating unit 22, a description file generating unit 23, a color layout group storage unit 24, a feature frame selecting unit 25, a color layout group generating unit 26 and an image identification unit 27.

The feature extraction frame selecting unit 21 selects a set of target frames from which features are to be extracted from a target image sequence which is registered in a database. The color layout group generating unit 22 extracts a feature indicative of a color layout feature of an image from each of the selected frames. The description file generating unit 23 describes the calculated feature group based upon a predetermined format, and then stores the described feature group into the color layout group storage unit 24.

The feature extraction frame selecting unit 25 selects a set of target frames from which a feature is to be extracted from an image sequence which is given as a query image. The color layout group generating unit 26 extracts a feature indicative of a color layout feature of an image from each of the selected frames. The image identification unit 27 sequentially compares a color layout group generated by the color layout group generating unit 26 with a color layout group stored in the representative color layout group 24 every frame. Then, the image identification unit 27 judges as to whether or not the query image sequence is consistent with any one of the image sequences stored in the color layout group storage unit. The image identification unit 27 outputs the judgment result as an identification result.

However, in the above-described conventional systems, there are the following problems.

In the system of the first conventional art, since only one color histogram representative of the image sequence is compared, a total number of the comparing operations is suppressed to a small number and the high-speed retrieving process operation can be realized. However, it is not possible to obtain a sufficient performance for identifying a image sequence. Also, since the layout structure is not considered in the color histogram, such an image which has the same color but different layout can be mistakenly retrieved.

Also, in the system of the second conventional art, since the feature is compared with each other in frame, a sufficiently high identification performance can be obtained. However, since the feature is compared in frame, a total number of the comparing operations is large and hence higher processing cost is required.

In relation to the above description, Japanese Laid-open Patent Application No. Hei-7-79206 discloses an automatic CM identification system. The automatic CM identification system of the conventional art has CM extracting apparatuses provided for respective of TV broadcasting areas, and a CM identification apparatus communicatably connected via communication paths to the plurality of CM extracting apparatuses. The CM extracting apparatus has a plurality of CM scanners and a CM extraction control unit. Respective of the plurality of CM scanners are provided in respective of CM identification target stations within a predetermined TV broadcasting area. Each CM scanner receives a broadcasting program of one corresponding station and detects CM audio data. The CM extraction control unit transmits CM data via the communication path to the CM apparatus. The CM data include the CM audio data detected by the plurality of CM scanners, a name of the station which has broadcasted the CM, the time when the CM was broadcasted, and a time duration of the CM in seconds. The CM identification apparatus has a CM reference data storage unit, a CM record file, and a comparing unit. The CM reference data storage units are provided in correspondence with respective of the TV broadcasting areas. Each of the CM reference data storage units stores CM reference data with respect to every CM identification target station. The CM reference data include audio data for comparing CMs which are scheduled to be broadcasted and adjunctive data containing identification codes of the CMs which are scheduled to be broadcasted. The CM record files are provided in correspondence with respective of CM identification target stations within each TV broadcasting area. The comparing unit compares the CM audio data contained in CM data received from the CM extracting apparatus of each of the YV broadcasting areas with the comparing-purpose audio data contained in the CM reference data of the corresponding station, which has been stored in the CM reference data storage unit for the corresponding TV broadcasting area. When the CM audio data is coincident with the comparing-purpose audio data, both the adjunctive data contained in the CM reference data and the CM broadcasting time data contained in the CM data are recorded in the corresponding CM recording file.

Also, Japanese Laid-open Patent Application No. 2001-92486 discloses a high-speed signal retrieving apparatus. In this conventional art, a portion which resembles a previously registered reference signal is retrieved from an input signal. A reference feature series is derived from the reference signal. An input feature series is derived from the input signal, and an interest window is set with respect to this input feature series. A similarity between the reference feature series and the input feature series within the interest window is calculated. Based on the calculated similarity, a skip width of the interest window is calculated, and then the interest window is moved by the skip width. At the position of the moved interest window, a judgment is made on the basis of the calculated similarity as to whether or not the moved interest window must be returned in the time reverse direction. The similarity calculating step, the skip width calculating step and the back track necessity judging step are repeatedly carried out. Thus, similarities between the reference signal and the plural positions of the input signal are calculated, the similarities are compared with a preset target similarity, and then whether the reference signal is present at the relevant positions of the input signal or not is determined.

Also, Japanese Laid-open Patent Application No. 2001-101205 discloses a video structuring apparatus. The video structuring apparatus of this conventional art has a video recording apparatus, an image feature extracting apparatus for extracting a feature of an image, and a structure recording medium for recording the extracted feature in combination with a digital image. The recorded image is segmented by a cut/shot changing point recording apparatus. The information acquired by a representative frame extracting apparatus, a camera information recording apparatus and an environmental information recording apparatus are added to the segmented images by an information adding apparatus, and then the information-added segmented images are managed.

Also, Japanese Laid-open Patent Application No. 2001-359125 discloses a CM investigation apparatus. The CM investigation apparatus of this conventional art is installed in a home, and data related to commercials which have been viewed in the home are transmitted as CM investigation-purpose data to a CM investigation center. The CM investigation apparatus has a receiving unit and a reception data storage unit. The receiving unit receives compressed CM data which is generated by compressing a data amount of an investigation target commercial video by using a specific algorithm among output data broadcasted from each of broadcasting stations. The reception data storage unit stores thereinto the received compressed CM data. To store output data, a compressed output data is recorded which is generated by compressing a data amount of broadcasting output data by using a specific algorithm. The broad casting output data is a data which has been actually viewed in a broadcasting receiver. The compressed output data is compared with the compressed CM data so as to determine the viewed commercial. The determination is transmitted to the CM investigation center.

Also, Japanese Laid-open Patent Application No. 2002-117037 discloses an image retrieving apparatus. The image retrieving apparatus of this conventional art retrieves an image which resembles a predetermined query image from a retrieval target moving picture. In this image retrieving apparatus, a frame feature extracting unit extracts a feature of at least a part of frames which are contained in the retrieval target moving picture. Then, the frame feature extracting unit outputs the extracted feature as a frame feature. A frame feature storage unit stores thereinto the frame feature outputted from the frame feature extracting unit. An image feature extracting unit extracts a feature of a query image, and outputs the extracted feature as an image feature. A similarity calculating unit compares the frame feature stored in the frame feature storage unit with the image feature outputted from the image feature extracting unit so as to calculate a similarity between them. A frame feature synthesizing unit synthesizes such frame features among the frame features stored in the frame feature storage unit as has the similarities satisfying a predetermined condition into at least one group. A similar image selecting unit selects at least one frame feature having the highest similarity within the group generated by the frame feature synthesizing unit. An image having the frame feature selected by the similar image selecting unit is shown as a retrieval result.

Also, Japanese Laid-open Patent Application No. 2002-335473 discloses a system for extracting retrieval information used for retrieving moving picture contents. In this conventional art, a moving picture content is subdivided every scene of the moving picture content. An image thumbnail unit selects a representative still image for every scene. Then, the representative still images of the respective scenes are stored in a moving picture retrieval information database in accordance with a storyline of the moving picture content.

Also, National Publication of the Translated Version of PCT Application No. 2002-537591 discloses a description scheme of multimedia archives. In this conventional art, a digital storage sub-system stores a multimedia record and its record description in accordance with a multimedia description scheme. A computer processing apparatus has at least one cluster which accesses the record description and relates at least two records within the digital storage sub-system based upon attribute of the record description. The computer processing apparatus generates an archive description which has an aggregate structure description scheme for assigning an index to the at least one cluster. The computer processing apparatus is connected to the digital storage sub-system under operable condition. An archive description storage apparatus is connected to the computer processing apparatus under operable condition in order to store archive description records.

Japanese Patent No. 3065314 discloses a high-speed signal retrieving method. In this conventional art, a feature series is generated as to a reference signal which is a previously recorded acoustic signal. An input signal interest window having a constant time length is set with respect to an input signal which is an acoustic signal inputted. A feature series as to the input signal within the input signal interest window is generated. An input signal similarity value is calculated which indicates a similarity between the generated feature series and the generated feature series. Based on the calculated input signal similarity value, a movable amount indicative of an amount for which the input signal interest window can be moved is calculated. Based on the calculated movable amount, a position of the input signal interest window is determined, and then the input signal interest window is set to the determined position. Then, the above-mentioned operations are repeatedly carried out. Input signal similarity values are calculated as to respective positions of the input signal interest window. Each of the input signal similarity values is compared with a predetermined threshold value. On the basis of the comparison result, a judgement is made as to whether or not the reference signal is present at a current position on the input signal which is indicated by the input signal interest window.

### Disclosure of Invention

It is therefore an object of the present invention to provide an image system and an image description system, which are capable of speeding up an identification process for an image sequence without deteriorating identification precision by describing image sequences such that image sequences which require identification in a unit of frame can be selected.

In an aspect of the present invention, an image description system has: a feature extracting unit for extracting layout features from respective of frames of an image sequence; and a representative feature calculating unit for calculating a layout feature representative of the image sequence from a group of the layout features extracted by the feature extracting unit.

In another aspect of the present invention, an image description system has: a feature extracting unit for extracting layout features from respective of frames of an image sequence; a representative feature calculating unit for calculating a layout feature representative of the image sequence from a group of the layout features extracted by the feature extracting unit; and a representative layout feature storage unit for storing the representative layout feature calculated by the representative feature calculating unit.

In still another aspect of the present invention, an image description system has: a feature extracting unit for extracting layout features from respective of frames of an image sequence; a representative feature calculating unit for calculating a layout feature representative of the image sequence from a group of the layout features extracted by the feature extracting unit; a representative layout feature storage unit for storing the representative layout feature calculated by the representative feature calculating unit; and a layout feature group storage unit for storing the group of the layout features calculated by the feature extracting unit.

In the above-description, it is preferable that the representative feature calculating unit calculates average values of respective elements of the layout feature extracted by the feature extracting unit, and then sets the average values as a representative feature.

It is also preferable that the representative feature calculating unit rearranges values of respective elements of the layout feature extracted by the feature extracting unit in either ascending order or descending order, calculates a median and then sets the calculated median as a representative feature.

The layout feature can be color layout information, or can be edge histogram information.

Also, the representative feature may be preferably described based on a description scheme. In the description scheme, the representative feature is selectable from a plurality of features including at least "ColorLayout" and "EdgeHistogram", and a representative feature calculating method is selectable from a plurality of methods including at least "Average", "Median" and "Intersection".

In still another aspect of the present invention, an image description software product executable on a computer realizes: a feature extracting function for extracting layout features from respective of frames of an image sequence; and a representative feature calculating function for calculating a layout feature representative of the image sequence from a group of the layout features extracted by the feature extracting function.

In still another aspect of the present invention, an image description method includes: a feature extracting step for extracting layout features from respective of frames of an image sequence; and a representative feature calculating step for calculating a layout feature representative of the image sequence from a group of the layout features extracted in the feature extracting step.

In still another aspect of the present invention, an image identification system has: a representative layout feature storage unit for storing a layout feature representative of an image sequence as a representative layout feature; and an image sequence selecting unit for selecting an image sequence which resembles a query image sequence by comparing the representative layout feature of the query image sequence stored in the representative layout feature storage unit with the representative layout feature of a registered image sequence stored in the representative layout feature storage unit.

In still another aspect of the present invention, an image identification system has: a representative layout feature storage unit for storing a layout feature representative of an image sequence as a representative layout feature; a feature extracting unit for extracting layout features from respective of frames of a query image sequence; a representative feature calculating unit for calculating a layout feature representative of the query image sequence from a group of the layout features extracted by the feature extracting unit; and an image sequence selecting unit for selecting a sequence which resembles the query image sequence by comparing the representative layout feature calculated by the representative feature calculating unit with the representative layout feature stored in the representative layout feature storage unit.

In still another aspect of the present invention, an image identification system has: a representative layout feature storage unit for storing a layout feature representative of an image sequence as a representative layout feature; a layout feature group storage unit for storing layout features associated with respective of frames of an image sequence; a feature extracting unit for extracting layout features from respective of frames of a query image sequence; a representative feature calculating unit for calculating a layout feature representative of the query image sequence from a group of the layout features extracted by the feature extracting unit; an image sequence selecting unit for selecting a sequence which resembles the query image sequence by comparing the representative layout feature calculated by the representative feature calculating unit with the representative layout feature stored in the representative layout feature storage unit; and an identification unit for matching the group of layout features extracted by the layout feature extracting unit against the layout features stored in the layout feature group unit as to the image sequence selected by the image sequence selecting unit.

In the above-description, it is preferable that the representative feature calculating unit calculates average values of respective elements of the layout feature extracted by the feature extracting unit, and then sets the average values as a representative feature.

It is also preferable that the representative feature calculating unit rearranges values of respective elements of the layout feature extracted by the feature extracting unit in either ascending order or descending order, calculates a median and then sets the calculated median as a representative feature.

The layout feature can be color layout information, or can be edge histogram information.

Also, the representative feature may be preferably described based on a description scheme. In the description scheme, the representative feature is selectable from a plurality of features including at least "ColorLayout" and "EdgeHistogram", and a representative feature calculating method is selectable from a plurality of methods including at least "Average", "Median" and "Intersection".

In still another aspect of the present invention, an image identification software product executable on a computer realizes: a storage function for storing a layout feature representative of an image sequence as a representative layout feature in a storage function of the computer; and a selection function for selecting an image sequence which resembles a query image sequence by comparing a representative layout feature of the query image sequence stored by the storage function with a representative layout feature of a registered image sequence.

In still another aspect of the present invention, an image identification method includes: a storing step for storing a layout feature representative of an image sequence as a representative layout feature; and an image sequence selecting step for selecting an image sequence which resembles a query image sequence by comparing a representative layout feature of the query image sequence stored in the storing step with a representative layout feature of a registered image sequence.

In still another aspect of the present invention, a description scheme is for describing a feature of an image sequence, in which a representative feature is selectable from a plurality of features including at least "ColorLayout" and "EdgeHistogram", and a representative feature calculating method is selectable from a plurality of methods including at least "Average", "Median" and "Intersection".

According to the present invention, as described above, it is possible to skip all operations of comparing the layout feature groups in a unit of frame, which require high process cost, with respect to registered image sequences which are determined to have no possibility of having the same contents as a query image sequence at the time when comparison between the representative layout features is carried out. Thus, it is possible to reduce cost of the identification process largely without deteriorating precision of the identification.

Also, representative layout features of image sequences are previously generated and stored. Thus, it is possible to provide in low cost an information used for selecting registered image sequences which have the possibility of having the same content as the query image sequence.

Furthermore, the representative layout features are described on the basis of a common description scheme. It is therefore possible to exchange the representative layout features between a plurality of systems, and to read out the representative layout features from a plurality of storage devices.

### Brief Description of Drawings

Fig. 1 is a diagram showing a system of the first conventional art;
Fig. 2 is a diagram showing a system of the second conventional art;
Fig. 3 is a block diagram showing a configuration according to a first embodiment of the present invention;
Fig. 4 is a flow chart showing a procedure of generating a representative layout feature by means of average in the first embodiment;
Fig. 5 is a flow chart showing a procedure of generating a representative layout feature by means of median acquisition in the first embodiment;
Fig. 6 is a diagram showing an example of color layout values by way of an averaging operation in the first embodiment;
Fig. 7 is a diagram showing an example of color layout values by acquiring median in the first embodiment;
Fig. 8 is a diagram showing a description scheme in the first embodiment;
Fig. 9 is a flow chart showing a procedure of identifying an image according.to the first embodiment;
Fig. 10 is a block diagram showing a configuration according to a second embodiment of the present invention;
Fig. 11 is a block diagram showing a configuration according to a third embodiment of the present invention;
Fig. 12 is a block diagram showing a configuration according to a fourth embodiment of the present invention;
Fig. 13 is a block diagram showing a configuration according to a fifth embodiment of the present invention;
Fig. 14 is a diagram showing an aggregation method which can be used as to respective features in the first embodiment;
Fig. 15 is a diagram showing a binary description syntax in the first embodiment;
Fig. 16 is a diagram showing an example of a binary expressed description of the aggregation method in the first embodiment; and
Fig. 17 is a diagram showing another description scheme in the first embodiment.

### Best Mode for Carrying Out the Invention

An image identification system according to the present invention will be described in detail with reference to the accompanying drawings.

### (FIRST EMBODIMENT)

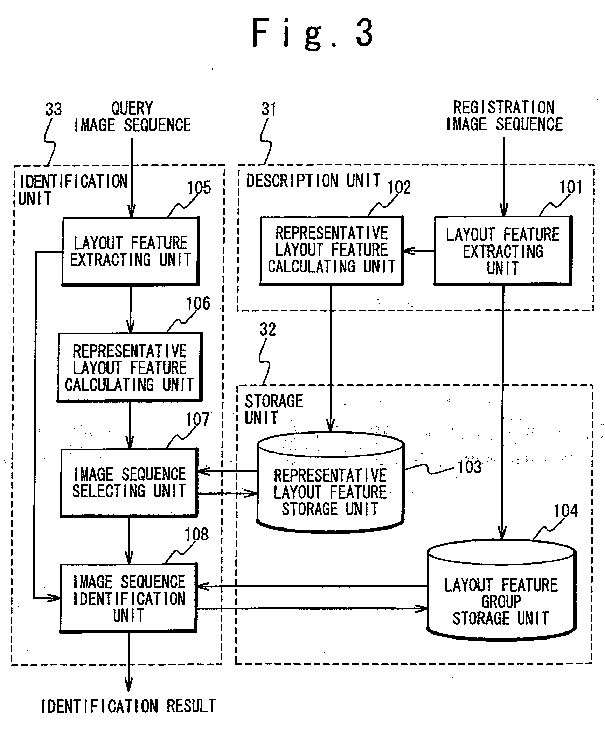

Fig. 3 is a block diagram showing an example of a configuration of an image identification system according to a first embodiment of the present invention.

As shown in Fig. 3, the image identification system according to the present embodiment has a description unit 31, a storage unit 32 and an identification unit 33. The description unit 31 describes a signal feature of an image by extracting a feature from an image sequence. The feature storage unit 32 stores a feature of an image to be registered. The identification unit 33 identifies a query image sequence.

The description unit 31 has a layout feature extracting unit 101 and a representative layout feature calculating unit 102.

The layout feature extracting unit 101 extracts a layout feature from each of frames of a registration image sequence to be registered. It is difficult according to a color histogram to identify an image the color of which is different from the color of a query image, but the content of which is identical to the content of the query image. Among images having the same contents, even when colors are shifted from each other, compositions of images are not substantially changed. Therefore, in order to identify an image, it is considered to be effective to employ a layout feature which represents rough composition of an image. Thus, the layout feature is utilized. Layout features of various kinds may be available. These layout features are defined in the International Standard ISO/IEC 15838-3 MPEG-7 VISUAL. Any of "COLOR LAYOUT DESCRIPTOR" for representing a layout structure of a color and "EDGEHISTOGRAM DESCRIPTOR" for representing a layout structure of an edge will be used.

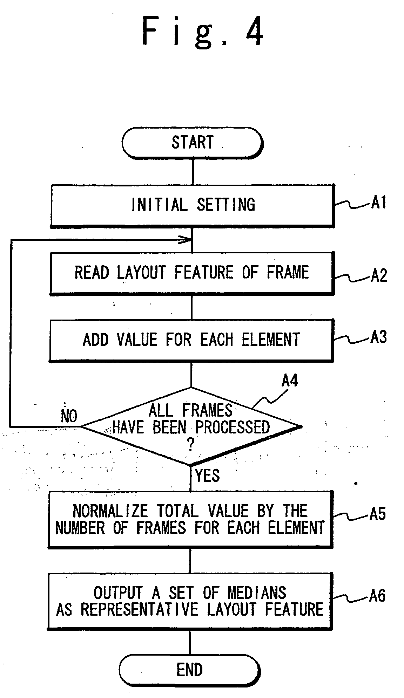

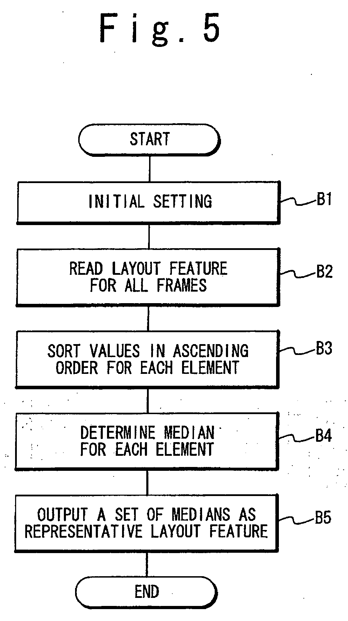

The representative layout feature calculating unit 102 calculates a representative layout feature representative of the registration image sequence from a group of layout features which are extracted by the layout feature extracting unit 101. Although various calculating methods may be conceived in calculating the representative layout feature, averaging the group of layout features and utilizing a median will be employed. Figs. 4 and 5 show flow charts for these calculating methods, respectively.

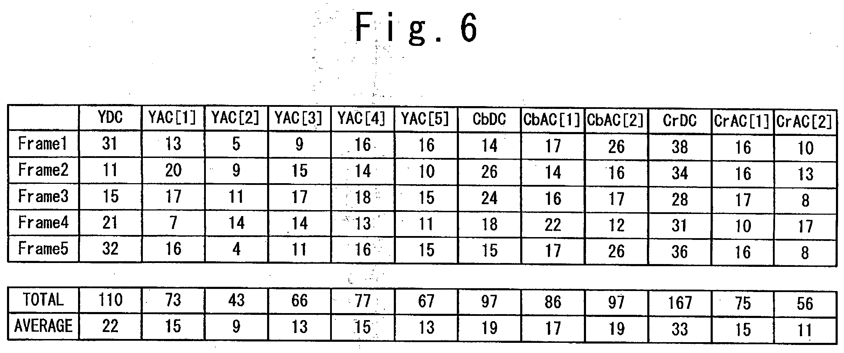

Fig. 4 is a flow chart showing a procedure of generating the representative layout feature by means of averaging. The procedure is shown by exemplifying the "COLOR LAYOUT" as the layout feature, which has 6 parameters of luminance and 3 parameters of color difference as features. Fig. 6 shows values of respective elements of the "COLOR LAYOUT" for each frame. An element "YDC" denotes a DC component of the luminance; elements "CbDC" and "CrDC" denote DC components of the color difference; an element "YAC[n]" denotes the n-th AC component of the luminance; and elements "CbAC[n]" and "CrAC [n] " denote the n-th AC components of the color difference.

First, a total value of each element of the layout feature is reset to zero (Step A1). Next, a layout feature of a frame extracted by the layout feature extracting unit 101 is read every frame. The values of each element of the read frame features are added to each other as to all of the frames (Steps A2 to A4). For instance, when an attention is paid to the element "YDC (DC component of luminance)" in the table shown in Fig. 6, a total value amounts to 31+11+15+21+32=110. The total value for each element of the layout features of all the frames is normalized by the number of the frames, and thus an average value is calculated (Step A5). When an attention is paid to the element "YDC (DC component of luminance)" in the table shown in Fig. 6, an average value becomes 110/5=22. A set of the calculated average values is the representative layout feature (Step A6). In the example of the table shown in Fig. 6, the values in an AVERAGE record correspond to the representative layout feature.

Fig. 5 is a flow chart showing a procedure of generating the representative layout feature b y means of median. The procedure is shown by exemplifying the "COLOR LAYOUT" as the layout feature, which has 6 parameters of luminance and 3 parameters of color difference as features. Fig. 5 shows values of respective elements of the "COLOR LAYOUT" for each frame. An element "YDC" denotes a DC component of the luminance; elements "CbDC" and "CrDC" denote DC components of the color difference; an element "YAC[n]" denotes the n-th AC component of the luminance; and elements "CbAC[n]" and "CrAC [n] " denote the n-th AC components of the color difference.

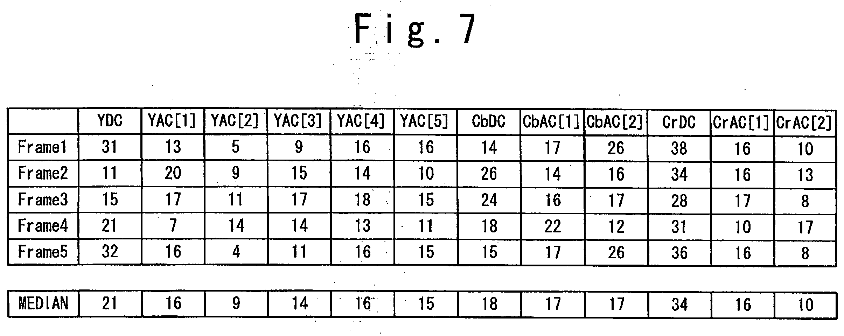

First, a total value of each element of the layout feature is reset to zero (Step B1). Next, layout features of all the frames extracted by the layout feature extracting unit is read. The values of the elements of all of the read frame features are rearranged every element in ascending order (Steps B2 to B3). For instance, when an attention is paid to the element "YDC (DC component of luminance)" in the table shown in Fig. 7, rearranged result is given as follows: 32, 31, 21, 15, and 11. A median value is acquired from a string of numerals arranged in ascending order for each element of layout features of the all frames, and then a median is determined (Step B4). When an attention is paid to the element YDC (DC component of luminance) in the table shown in Fig. 7, the median is 21. A set of the calculated medians is the representative layout feature (Step B5). In the example of the table shown in Fig. 7, the values in a MEDIAN record correspond to the representative layout feature.

In addition, another method may be conceived in which, after each element has been rearranged in ascending order, only a minimum value is selected for each value instead of determining the median.

The extracted representative feature is described on the basis of a predetermined description scheme. Since the description scheme is previously defined and is shared among terminals, it is possible to exchange the description data with other terminals and utilize the description data among a plurality of terminals in conjunction thereto.

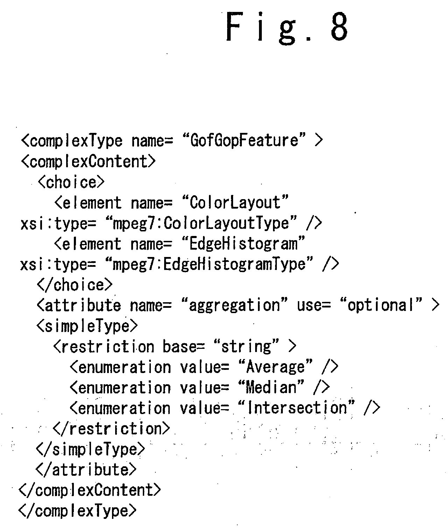

Various schemes may be employed as the description scheme. Fig. 8 shown an example of the description scheme. The description scheme is defined such that any one of "ColorLayout" and "EdgeHistogram" is selected as a representative layout feature, and any one of averaging (Average), a median (Median) and a minimum value (Intersection) is selected as a method of generating the representative layout feature (aggregation).

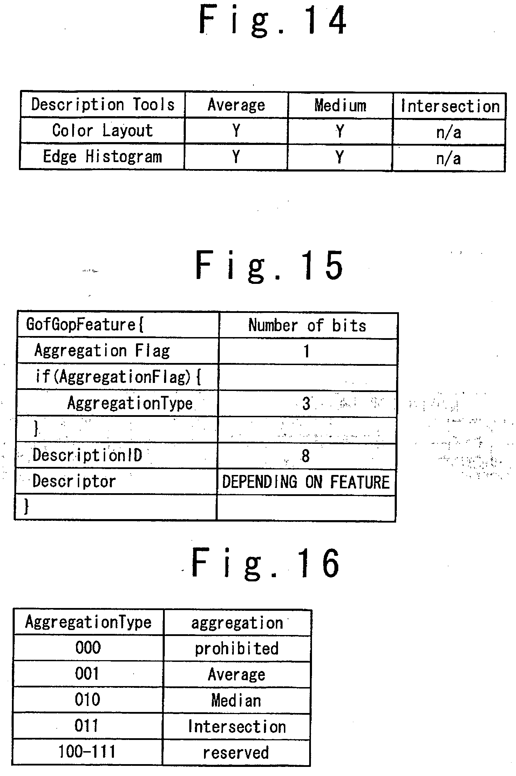

Also, it is possible to describe a feature in a binary expression instead of describing it based on the description scheme. Fig. 15 shows an example of syntax of a feature description in the binary expression. On describing a feature in the binary expression, whether a method of generating a representative layout feature (aggregation) is defined or not is first described. In the case when an aggregation is described, "1" is allocated, whereas in the case when an aggregation is not described, "0" is allocated. Next, in the case when the aggregation is described, a method of generating a representative layout feature is described. In the case of the average (Average), "001" is allocated; in the case of the median (Median), "010" is allocated; and in the case of the minimum value (Intersection), "011" is allocated. Then, an identifier is allocated which indicates the feature selected as the representative layout feature. In the case of ColorLayout, "4" is allocated, whereas in the case of EdgeHistogram, "8" is allocated. Further, a content of the selected feature in the binary expression follows. Such a binary expression method defined by ISO/IEC 15938-3 is employed as the binary expression method.

Semantics in the description scheme shown in Fig. 8 and the binary syntax shown in Fig. 15 is given as follows:

### · Descriptor ID

This field corresponds to an identifier for specifying a type of a representative feature. In the case of ColorLayout, 4 is allocated. In the case of EdgeHistogram, 8 is allocated. The other values are prohibited.

### · Descriptor

This field indicates a feature generated by using description tools which are defined in the International Standard ISO/IEC 15838-3. Available tools are ColorLayout and EdgeHistogram.

### · AggregationFlag

This field indicates as to whether an aggregation is defined or not. In the case when "1" is allocated, an attribute of the aggregation is given as follows:

### · aggregation

In this optional field, an aggregation method for generating a representative feature from a group of frames/images is designated. The aggregation is carried out for the entire elements contained in the group of frames/images. Any one of the following types can be applied.

### · Average

An aggregation by an average implies that each feature element of each frame/image is sequentially added, the total value is normalized by the number of the frames/images, and thus each element of a feature is calculated.

### · Median

An aggregation by a median implies that a list is produced in which values of each feature element of the frames/images are rearranged in ascending order, and a median is obtained from this list so as to be used as a representative value.

### · Intersection

An aggregation by an intersection implies that each element of a representative feature is obtained by calculating a minimum value as to each element from features which are contained in all of the frames/images.

It should be noted that a use of a part of the aggregation methods is prohibited. The aggregation methods which can be used for each feature are designated by a mark "Y" in Fig. 14.

It shows that the Average and the Median can be applied as the aggregation method to both of the ColorLayout and the EdgeHistogram.

When describing the aggregation method (AggregationType) in a binary expression, a table shown in Fig. 16 is used. More specifically, in the case of the average (Average), "001" is allocated; in the case of the median (Median), "010" is allocated; and in the case of the minimum value (Intersection), "011" is allocated.

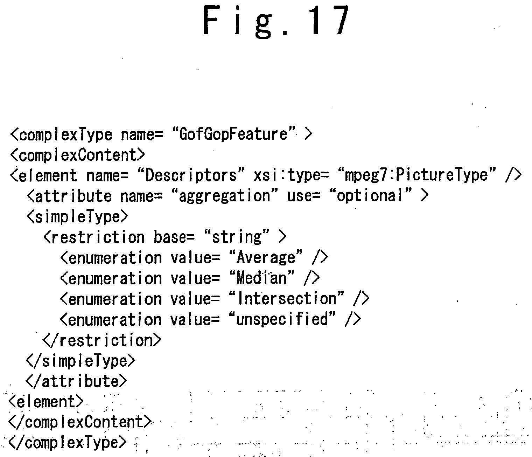

Fig. 17 shows an example of another description scheme. As the representative feature, in addition to the "Colorlayout" and the "EdgeHistogram", one or a plurality of all image features defined in MPEG-7 can be instanced. It should be noted that "Picturetype" is a decription scheme which aggregates still image features.

Also, the defined aggregation method is not necessary selected, but an undefined (unspecified) one can be selected as the aggregation method. By leaving an aggregation method unspecified, it becomes possible to define and utilize an aggregation method which is specific to a system.

As explained above, by describing the representative layout feature on the basis of a common description scheme, it is possible to exchange the representative layout features among a plurality of systems and to read out the representative layout features from a plurality of storage devices.

Moreover, by describing the representative layout feature in the binary expression based on the defined binary expression syntax, it is possible to describe a feature with considerably small amount of information, as compared with the case when describing the representative layout feature on the basis of the description scheme.

The storage unit 32 has a representative layout feature storage unit 103 and a layout feature group storage unit 104.

The representative layout feature storage unit 103 stores the representative layout feature calculated by the representative layout feature calculating unit 102. Also, the layout feature group storage unit stores layout features of respective of the frames which are extracted by the layout feature extracting unit 101.

The identification unit 33 has a layout feature extracting unit 105, a representative layout feature calculating unit 106, an image sequence selecting unit 107 and an image sequence identification unit 108.

The layout feature extracting unit 105 extracts a layout feature from each of frames of an inputted query image sequence. The extraction method is similar to that of the layout feature calculating unit 101.

The representative layout feature calculating unit 106 calculates a representative layout feature representative of the query image sequence from a group of the layout features extracted by the layout feature extracting unit 105. The calculation method is similar to that of the representative layout feature calculating unit 102.

The image sequence selecting unit 107 evaluates a similarity by comparing the representative layout feature of the query image sequence generated by the representative layout feature calculating unit 106 with representative layout features of the registered image sequences stored in the representative layout feature storage unit 103. Then, the image sequence selecting unit 107 selects only registered image sequences which are judged to have possibility of having the same content as the query image sequence.

The image sequence identification unit 108 compares the group of layout features of the query image sequence generated by the layout feature calculating unit 105 with the group of layout features of the registered image sequence stored in the layout feature group storage unit 104, as to the registered image sequences selected by the image sequence selecting unit 107. The image sequence identification unit 108 evaluates a similarity based on the comparison, and judges as to whether or not the content of the registered image sequence is identical to that of the query image sequence. When there is a registered image having the same content, the image sequence identification unit 108 outputs a unique ID of the registered image sequence having the same content.

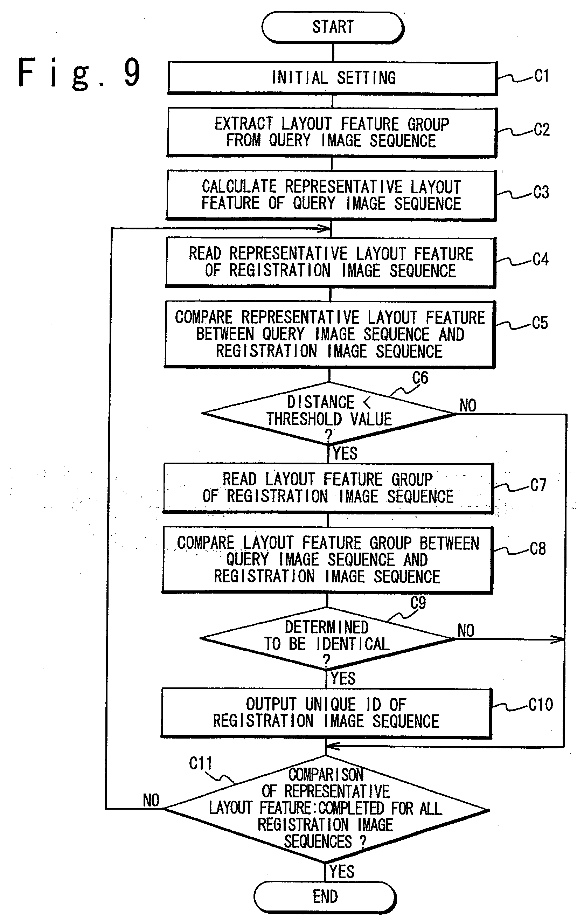

A procedure of identifying an image sequence will be described with reference to Figs. 3 and 9. Fig. 9 is a flow chart showing the procedure of identifying an image sequence according to the present embodiment. First, representative layout features of all registration image sequences are stored beforehand in the representative layout feature storage unit 103 in combination with unique IDs indicative of respective images. Also, layout feature groups of all the registration image sequences are stored beforehand in the layout feature storage unit 104 in combination with the unique IDs indicative of respective images (Step C1).

A layout feature and a representative layout feature are extracted from an inputted query image sequence by the layout feature extracting unit 105 and the representative layout feature calculating unit 106, respectively (Steps C2 to C3).

Subsequently, the image sequence selecting unit 107 reads one of the representative layout features of the registered image sequences, and then compares the read representative layout feature with the representative layout feature of the query image sequence (Steps C4 to C5). The image sequence selecting unit 107 calculates a distance between the representative layout feature of the query image sequence and the representative layout feature of the one registered image sequence which has been read. Then, the image sequence selecting unit 107 judges whether or not the calculated distance is smaller than or equal to a predetermined threshold value (Step C6). In the case when the calculated distance is smaller than or equal to the predetermined threshold value, the image selecting unit 107 judges that there is a possibility that the query image sequence has the same content as the one registered image sequence, and then outputs a unique ID of the relevant registered image sequence ("YES" in Step C6).

The image sequence identification unit 108 reads a layout feature group corresponding to the unique ID of the image sequence which is judged to have the possibility of having the same content (Step C7). The image sequence identification unit 108 compares the read layout feature group with a layout feature group of the query feature group (Step C8). As a method of comparing time-series data of the layout features, for example, the method described in Japanese Laid-open Patent Application No. 2000-259832 (the second prior art) can be employed, which enables the high-speed comparison. In the case when the registered image sequence is determined to have the same content as the query image sequence as a result of the comparison, the unique ID of the registered image sequence is outputted (Steps C9 to C10).

According to the first embodiment, as described above, the image sequence selecting unit 107 and the image sequence identification unit 108 are provided. It is therefore possible to skip all operations of comparing the layout feature groups in a unit of frame, which require high process cost, with respect to the registered image sequences which are determined to have no possibility of having the same contents as the query image sequence at the time when the comparison between the representative layout features is carried out. Thus, it is possible to reduce cost of the identification process largely without deteriorating precision of the identification.

Also, the representative layout features of the image sequences are generated by the representative layout feature calculating unit 102, and are stored in the representative layout feature storage unit 104. Thus, it is possible to select with low cost the registered image sequences which have the possibility of having the same content as the query image sequence.

### (SECOND EMBODIMENT)

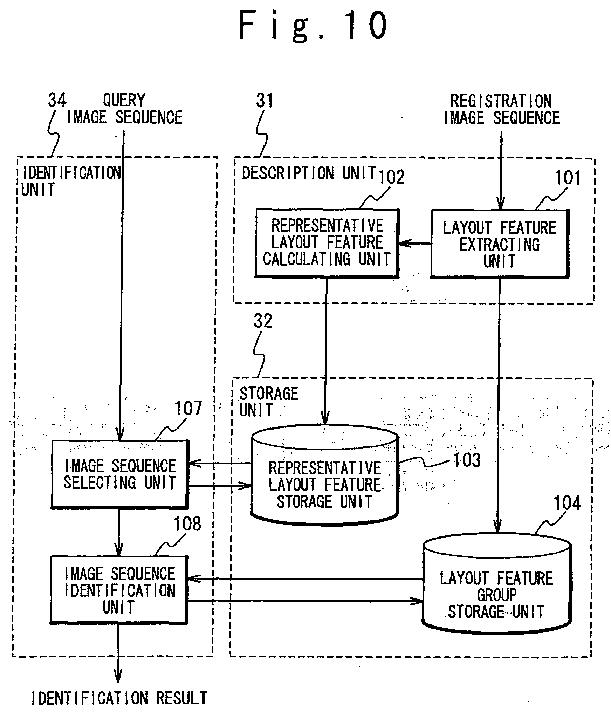

As shown in Fig. 10, an image identification system according to a second embodiment of the present invention does not have the layout feature extracting unit 105 and the representative layout feature calculating unit 106. Instead, a representative layout feature and a layout feature group of a query image sequence are previously extracted and stored in the representative layout feature storage unit 103 and the layout feature group storage unit 104, respectively.

The image sequence selecting unit 107 evaluates a similarity by comparing the representative layout feature of the query image sequence with the representative layout features of the registered image sequences stored in the representative layout feature storage unit 103. Then, the image sequence selecting unit 107 selects only registered image sequences which are judged to have possibility of having the same content as the query image sequence.

The image sequence identification unit 108 evaluates a similarity by comparing the layout feature group of the query image sequence with the layout feature group of the registered image sequence stored in the layout feature group storage unit 104, as to the registered image sequence selected by the image sequence selecting unit 107. Then, the image sequence identification unit 108 judges whether or not the content of the selected registered image sequence is identical to the content of the query image sequence. In the case when there is a registered image having the same content, the image sequence identification unit 108 outputs a unique ID of the registered image sequence. Since the operation of calculating features is eliminated, a higher speed processing becomes possible.

According to the second embodiment, the image sequence selecting unit 107 and the image sequence identification unit 108 are provided. It is therefore possible to skip all operations of comparing the layout feature groups in a unit of frame, which require high process cost, with respect to the registered image sequences which are determined to have no possibility of having the same contents as the query image sequence at the time when the comparison between the representative layout features is carried out. Thus, it is possible to reduce cost of the identification process largely without deteriorating precision of the identification.

### (THIRD EMBODIMENT)

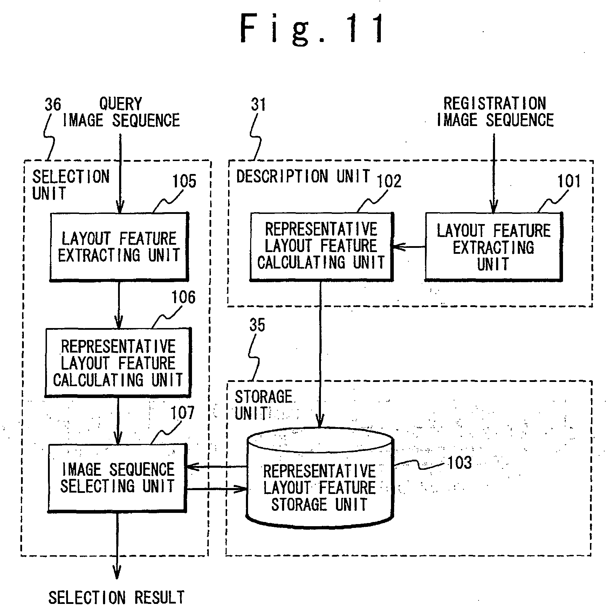

Fig. 11 shows an image identification system according to a third embodiment of the present invention. As shown in Fig. 11, the image identification system according to the third embodiment has a description unit 31, a storage unit 35 and a selection unit 36. The description unit 31 extracts a feature from an image sequence and describes the signal feature of the image. The storage unit 35 stores features of images to be registered. The selection unit 36 is provided for a query image sequence.

The description unit 31 is similar to that in the first embodiment.

The storage unit 35 has a representative layout feature storage unit 103. The representative layout feature storage unit 103 stores a representative layout feature generated by the description unit 31.

The selection unit 36 has a layout feature extracting unit 105, a representative layout feature calculating unit 106 and an image sequence selecting unit 107. Functions of the layout feature extracting unit 105, the representative layout feature calculating unit 106 and the image sequence selecting unit 107 are similar to those in the first embodiment.

According to the third embodiment, the image sequence selecting unit 107 is provided. It is therefore possible to select registered image sequences which have no possibility of having the same content. Also, the representative layout features of the image sequences are generated by the representative layout feature calculating unit 102, and are stored in the representative layout feature storage unit 104. Thus, it is possible to select with low cost the registered image sequences which have possibility of having the same content.

### (FOURTH EMBODIMENT)

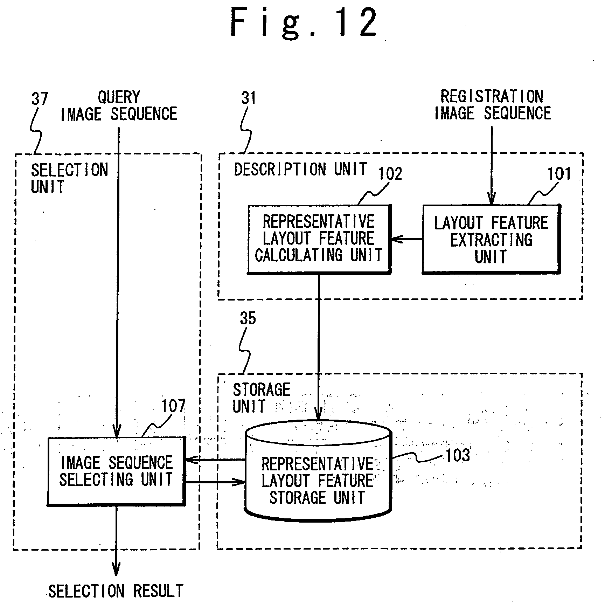

Fig. 12 shows an image identification system according to a fourth embodiment of the present invention. As shown in Fig. 12, the image identification system does not have the layout feature extracting unit 105 and the representative layout feature calculating unit 106 which are provided in the third embodiment. Instead, a representative layout feature of a query image sequence is previously calculated and stored in the representative layout feature storage unit 103.

According to the fourth embodiment, the image sequence selecting unit 107 is provided. It is therefore possible to select registered image sequences which have no possibility of having the same content. Also, the representative layout features of the image sequences are generated by the representative layout feature calculating unit 102, and are stored in the representative layout feature storage unit 104. Thus, it is possible to select with low cost the registered image sequences which have possibility of having the same content.

### (FIFTH EMBODIMENT)

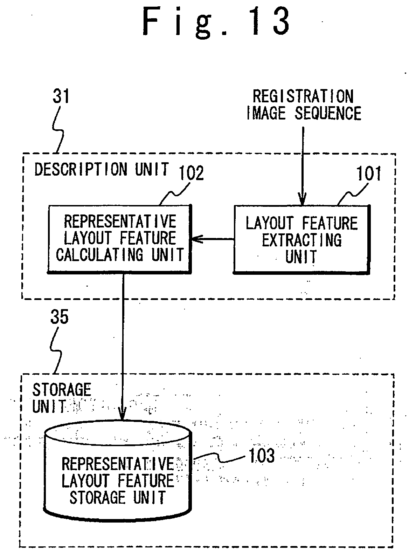

Fig. 13 shows an image identification system according to a fifth embodiment of the present invention. As shown in Fig 13, the image identification system according to the present embodiment has a description unit 31 and a storage unit 3'5. The description unit 31 extracts a feature from an image sequence and describes the signal feature of the image. The storage unit 35 stores features of images to be registered. The operations of description unit 31 and the storage unit 35 are similar to those is the third embodiment.

According to the fifth embodiment, the representative layout features of the image sequences are generated by the representative layout feature calculating unit 102, and are stored in the representative layout feature storage unit 104. Thus, it is possible to provide information used for selecting with low cost the registered image sequences which have possibility of having the same content.

Next, a concrete example will be explained.

A commercial identification system will be shown, in which a commercial (CM) is used as an image. In this system, a color layout descriptor is generated based on a received broadcasting image, matching against each of CMs registered in a database is sequentially carried out, and then the CM on the air is identified. An identification result is notified to a user as a broadcasting investigation report.

First, CM images with the duration of 15 seconds are registered. A color layout is extracted from each of frames of a CM image. Then a color layout representative of each of the CM images is calculated from a group of the extracted color layouts. The calculated representative color layouts and the extracted color layout groups are beforehand stored in the CM database.

Next, matching of a color layout arrangement of an image acquired from broadcast waves against a color layout arrangement of each of the CM images previously registered is carried out. Frames which are included within 15 seconds are sequentially inputted as query image sequences from the broadcast images. Color layouts are extracted from the query image sequence, and then a representative color layout is calculated from a group of the extracted color layouts.

By the comparison between the representative color layouts, CMs having possibility of having the same content as the image on the air which corresponds to the query image sequence are selected.

After that, comparison of the color layouts of all frames between the selected CMs and the query image sequence is made. The distances between the query image and all the selected CMs are calculated and a retrieval is made. In the case when a feature distance with respect to a CM which is judged as the most resembling CM is smaller than or equal to a predetermined threshold value, the video scene on the air is determined to be the CM. In order to realize a real time detection, it is required to complete the retrieving operation within a sampling interval of input images. An identification result is notified to a user as a broad casting investigation report.

According to the present embodiment, a comparison of the number of identification operations is made between a case that the comparing step of the representative color layout is included and a case that the comparing step of the representative color layout is not included and matching of color layouts of all frames contained in the query image sequence is made against all the CMs. The number of the identification operations can be reduced to approximately 10 % without deteriorating precision of the identification.

It should be noted that the above-described embodiments are preferred examples of the present invention. The present invention is not limited to these embodiment and can be variously modified without departing from the scope of the present invention.

According to the present invention, as described above in detail, it is possible to skip all operations of comparing the layout feature groups in a unit of frame, which require high process cost, with respect to the registered image sequences which are determined to have no possibility of having the same contents as a query image sequence at the time when comparison between the representative layout features is carried out. Thus, it is possible to reduce cost of the identification process largely without deteriorating precision of the identification.

Also, representative layout features of image sequences are previously generated and stored. Thus, it is possible to provide in low cost an information used for selecting registered image sequences which have the possibility of having the same content as the query image sequence.

Furthermore, the representative layout features are described on the basis of a common description scheme. It is therefore possible to exchange the representative layout features between a plurality of systems, and to read out the representative layout features from a plurality of storage devices.

It should also be noted that the units for achieving various kinds of operations in the above embodiments can be realized in the form of hardware, or can be alternatively realized in the form of software. In this alternative case, the functions of the respective units can be realized by a CPU (not shown) in a general computer system executing the software which is stored in a memory (not shown).

## Claims

1. An image description system comprising:
a feature extracting unit extracting layout features from respective of frames of an image sequence; and
a representative feature calculating unit calculating a representative layout feature representative of said image sequence from a group of said layout features extracted by said feature extracting unit.

2. An image description system comprising:
a feature extracting unit extracting layout features from respective of frames of an image sequence;
a representative feature calculating unit calculating a representative layout feature representative of said image sequence from a group of said layout features extracted by said feature extracting unit; and
a representative layout feature storage unit storing said representative layout feature calculated by said representative feature calculating unit.

3. An image description system comprising:
a feature extracting unit extracting layout features from respective of frames of an image sequence;
a representative feature calculating unit calculating a representative layout feature representative of said image sequence from a group of said layout features extracted by said feature extracting unit;
a representative layout feature storage unit storing said representative layout feature calculated by said representative feature calculating unit; and
a layout feature group storage unit storing said group of layout features calculated by said feature extracting unit.

4. The image description system according to any one of claims 1 to 3,
wherein said representative feature calculating unit calculates average values of respective elements of a layout feature extracted by said feature extracting unit as a representative feature.

5. The image description system according to any one of claims 1 to 3,
wherein said representative feature calculating unit rearranges values of respective elements of a layout feature extracted by said feature extracting unit in any of ascending order and descending order, and calculates a median as a representative feature.

6. The image description system according to any one of claims 1 to 5,
wherein said layout feature is a color layout information.

7. The image description system according to any one of claims 1 to 5,
wherein said layout feature is an edge histogram information.

8. The image description system according to any one of claims 1 to 7,
wherein said representative feature is described based on a description scheme in which said representative feature is selectable from a plurality of features including at least ColorLayout and EdgeHistogram, and a representative feature calculating method is selectable from a plurality of methods including at least Average and Median.

9. An image description software product executable on a computer realizing:
a feature extracting function for extracting layout features from respective of frames of an image sequence; and
a representative feature calculating function for calculating a layout feature representative of said image sequence from a group of said layout features extracted by said feature extracting function.

10. An image description method comprising:
a feature extracting step for extracting layout features from respective of frames of an image sequence; and
a representative feature calculating step for calculating a layout feature representative of said image sequence from a group of said layout features extracted in said feature extracting step.

11. An image identification system comprising:
a representative layout feature storage unit storing a layout feature representative of an image sequence as a representative layout feature; and
an image sequence selecting unit selecting an image sequence which resembles a query image sequence by comparing said representative layout feature of said query image sequence stored in said representative layout feature storage unit with said representative layout feature of a registered image sequence stored in said representative layout feature storage unit.

12. An image identification system comprising:
a representative layout feature storage unit storing a layout feature representative of an image sequence as a representative layout feature;
a feature extracting unit extracting layout features from respective of frames of a query image sequence;
a representative feature calculating unit calculating a representative layout feature representative of said query image sequence from a group of said layout features extracted by said feature extracting unit; and
an image sequence selecting unit selecting a sequence which resembles said query image sequence by comparing said representative layout feature calculated by said representative feature calculating unit with said representative layout feature stored in said representative layout feature storage unit.

13. An image identification system comprising:
a representative layout feature storage unit storing a layout feature representative of an image sequence as a representative layout feature;
a layout feature group storage unit storing layout features associated with respective of frames of said image sequence;
a feature extracting unit extracting layout features from respective of frames of a query image sequence;
a representative feature calculating unit calculating a representative layout feature representative of said query image sequence from a group of said layout features extracted by said feature extracting unit;
an image sequence selecting unit selecting an image sequence which resembles said query image sequence by comparing said representative layout feature calculated by said representative feature calculating unit with said representative layout feature stored in said representative layout feature storage unit; and
an identification unit matching said group of layout features extracted by said layout feature extracting unit against said layout features stored in said layout feature group as to said image sequence selected by said image sequence selecting unit.

14. The image identification system according to claim 12 or 13,
wherein said representative feature calculating unit calculates average values of respective elements of a layout feature extracted by said feature extracting unit as a representative feature.

15. The image identification system according to claim 12 or 13,
wherein said representative feature calculating unit rearranges values of respective elements of a layout feature extracted by said feature extracting unit in any of ascending order or descending order, and calculates a median as a representative feature.

16. The image identification system according to any one of claims 11 to 15,
wherein said layout feature is a color layout information.

17. The image identification system according to any one of claims 11 to 16,
wherein said layout feature is an edge histogram information.

18. The image identification system according to any one of claims 11 to 17,
wherein said representative feature is described based on a description scheme in which said representative feature is selectable from a plurality of features including at least ColorLayout and EdgeHistogram, and a representative feature calculating method is selectable from a plurality of methods including at least Average and Median.

19. An image identification software product executable on a computer realizing:
a storage function for storing a layout feature representative of an image sequence as a representative layout feature in a storage function of said computer; and
a selection function for selecting an image sequence which resembles a query image sequence by comparing said representative layout feature of said query image sequence stored by said storage function with said representative layout feature of a registered image sequence stored by said storage function.

20. An image identification method comprising:
a storing step for storing a layout feature representative of an image sequence as a representative layout feature; and
an image sequence selecting step for selecting an image sequence which resembles a query image sequence by comparing said representative layout feature of said query image sequence stored in said storing step with said representative layout feature of a registered image sequence stored in said storing step.

21. A description scheme for describing a feature of an image sequence,
wherein a representative feature is selectable from a plurality of features including at least ColorLayout and EdgeHistogram, and a representative feature calculating method is selectable from a plurality of methods including at least Average and Median.
